(19) **Europäisches Patentamt**
**European Patent Office**
**Office européen des brevets**

(11) **EP 4 651 010 A1**

(12) **EUROPEAN PATENT APPLICATION**

(43) Date of publication:
**19.11.2025 Bulletin 2025/47**

(21) Application number: **25166066.8**

(22) Date of filing: **25.03.2025**

(51) International Patent Classification (IPC):
**G06F 30/23** (2020.01)    **G06F 30/27** (2020.01)
**G06F 30/28** (2020.01)    G06F 111/10 (2020.01)
**G06F 113/08** (2020.01)

(52) Cooperative Patent Classification (CPC):
**G06F 30/28; G06F 30/23; G06F 30/27;**
G06F 2111/10; G06F 2113/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.05.2024 IN 202421037547**

(71) Applicant: **Tata Consultancy Services Limited
Mumbai, Maharashtra 400 021 (IN)**

(72) Inventors:
- **SARKAR, Rajat Kumar**
  **411057 Pune, Maharashtra (IN)**
- **JADHAV, Vishal Sudam**
  **411057 Pune, Maharashtra (IN)**
- **SAKHINANA, Sagar Srinivas**
  **411057 Pune, Maharashtra (IN)**
- **RUNKANA, Venkataramana**
  **411057 Pune, Maharashtra (IN)**
- **ARIPIRALA, Krishna Sai Sudhir**
  **411057 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(54) **HIGH RESOLUTION SIMULATION PREDICTION FOR COMPUTATIONAL FLUID DYNAMICS**

(57)    This disclosure relates generally to high resolution simulation prediction for Computational Fluid Dynamics (CFD). CFD plays a crucial role in comprehending intricate physical phenomena spanning across scientific and engineering domains, hence it is essential to conduct simulations at high mesh resolutions for the governing equation of fluid flow. The current state-of-the-art super-resolution techniques involve reconstructing high-resolution data from down sampled low-resolution is limited to single scenario and does not accurately reflect real-world scenarios. The disclosed techniques enable prediction of fine-resolution data from low-resolution inputs from a variety of real-world CFD scenarios. Further the disclosed technique also identifies the most relevant network architecture for any CFD scenario and enabling accurate prediction of high-resolution data from low-resolution inputs by training the network architecture. Furthermore, the disclosure ensures also the robustness of the disclosed system through uncertainty analysis, encompassing both aleatoric and epistemic uncertainty analyses.

FIG. 2

**Description**

CROSS-REFERENCE TO RELATED APPLICATIONS AND PRIORITY

The present application claims priority to Indian application no. 202421037547, filed on May 13, 2024.

TECHNICAL FIELD

The disclosure herein generally relates to High resolution simulation prediction for Computational Fluid Dynamics and, more particularly, to a method and a system for High resolution simulation prediction for Computational Fluid Dynamics.

BACKGROUND

Computational Fluid Dynamics (CFD) plays a crucial role in comprehending intricate physical phenomena spanning across scientific and engineering domains, including aerospace, automotive, energy, and many more. To gain a profound understanding of these physical phenomena, it is essential to conduct simulations at high mesh resolutions of the governing equation of fluid flow. However, conducting simulation of fluid flow within intricate geometries at high mesh resolutions is inherently computationally intensive and time-consuming.

Several techniques are utilized to conduct simulation at high mesh resolutions in CFD for partial differential equations (PDEs), of which coarse mesh simulations gained popularity primarily due to their computational efficiency. However, coarse mesh simulations with their inherent limitation of low mesh resolution, often compromising the precision of the results obtained that resulted in lack of precision.

In order to circumvent the issue of simulating high-resolution mesh solutions of PDEs, several researchers adapted the super-resolution technique, commonly used in Computer Vision, wherein these techniques reconstruct the original high-resolution data from the down sampled low-resolution data they have generated. Applying the conventional definition of super-resolution directly to the world of PDEs presents two notable challenges. Firstly, the process of generating a dataset by down sampling high-resolution data to create low-resolution data differs significantly from generating simulations of low-resolution data using conventional numerical solvers. Secondly, there is a shortage of high-resolution mesh data, making it difficult to acquire sufficient training data for super-resolution models. This distinction arises from the complex physical properties that are inherently associated with high-resolution data. Simply down sampling from high-resolution data results in retaining most of the governing physics, which may not accurately reflect real-world scenarios. To address this challenge, numerous research has devised alternative approaches to reframe the super-resolution problem, aiming for closer alignment with practical applications. Few prior arts utilize a coarse mesh simulation counterpart to predict the fine mesh simulation, however these techniques either focus on using simulated images, restricting manipulation for learning physics and leading to increased noise and artifacts, along with limited information capture. Alternatively, several other state-of-art techniques work with a small number of cells, typically less than 10K, which may not be sufficient when dealing with realistic industrial data featuring complex physics or intricate geometry.. Further, many existing methods are limited to a CFD problems. Hence there is a requirement of an alternative approach for framing the super-resolution problem to align more closely with several practical applications.

SUMMARY

Embodiments of the present disclosure present technological improvements as solutions to one or more of the above-mentioned technical problems recognized by the inventors in conventional systems. For example, in one embodiment, a method for High resolution simulation prediction for Computational Fluid Dynamics is provided.

The system includes a memory storing instructions, one or more communication interfaces, and one or more hardware processors coupled to the memory via the one or more communication interfaces, wherein the one or more hardware processors are configured by the instructions to receive a plurality of inputs, via the one or more hardware processor, wherein the plurality of inputs are associated with a Computational Fluid Dynamics (CFD) problem. The system is further configured to generate a set of simulation data for the CFD problem based on a numerical technique, via the one or more hardware processors, wherein the set of simulation data comprises a plurality of coarse mesh data and a plurality of fine mesh data. The system is further configured to select a set of primary features and a set of secondary features from the set of simulation data, via the one or more hardware processors, using a rule-engine technique based on the CFD problem. The system is further configured to identify a training process and a network architecture, via the one or more hardware processors, wherein the network architecture and the corresponding training process is identified for the CFD problem. The system is further configured to sample the set of primary features and the set of secondary features, via the one or more hardware processors, based on the network architecture to obtain a set of training data. The system is further configured to generate a trained model from the identified network architecture using the training process by minimizing a customized loss function, via the one or more hardware processor, wherein the trained model predicts a plurality of fine mesh predicted data from the corresponding plurality of coarse mesh data. The system is further configured to perform an uncertainty analysis on the trained model, via the one or more hardware processor, wherein the uncertainty analysis comprises an aleatoric uncertainty analyses and an epistemic uncertainty analysis.

In another aspect, a method for High resolution simulation prediction for Computational Fluid Dynamics is provided. The method includes receiving a plurality of inputs, wherein the plurality of inputs are associated with a Computational Fluid Dynamics (CFD) problem. The method further comprises generating a set of simulation data for the CFD problem based on a numerical technique, wherein the set of simulation data comprises a plurality of coarse mesh data and a plurality of fine mesh data. The method further comprises selecting a set of primary features and a set of secondary features from the set of simulation data using a rule-engine technique based on the CFD problem. The method further comprises identifying a training process and a network architecture, wherein the network architecture and the corresponding training process is identified for the CFD problem. The method further comprises sampling the set of primary features and the set of secondary features, based on the network architecture to obtain a set of training data. The method further comprises generating a trained model from the identified network architecture using the training process by minimizing a customized loss function, wherein the trained model predicts a plurality of fine mesh predicted data from the corresponding plurality of coarse mesh data. The method further comprises performing an uncertainty analysis on the trained model, wherein the uncertainty analysis comprises an aleatoric uncertainty analyses and an epistemic uncertainty analysis.

In yet another aspect, one or more non-transitory machine-readable information storage mediums comprising one or more instructions are provided. The one or more instructions which when executed by one or more hardware processors cause: receiving a plurality of inputs, wherein the plurality of inputs are associated with a Computational Fluid Dynamics (CFD) problem; generating a set of simulation data for the CFD problem based on a numerical technique, wherein the set of simulation data comprises a plurality of coarse mesh data and a plurality of fine mesh data; selecting a set of primary features and a set of secondary features from the set of simulation data using a rule-engine technique based on the CFD problem; identifying a training process and a network architecture, wherein the network architecture and the corresponding training process is identified for the CFD problem; sampling the set of primary features and the set of secondary features, based on the network architecture to obtain a set of training data. The method further comprises generating a trained model from the identified network architecture using the training process by minimizing a customized loss function, wherein the trained model predicts a plurality of fine mesh predicted data from the corresponding plurality of coarse mesh data; and performing an uncertainty analysis on the trained model, wherein the uncertainty analysis comprises an aleatoric uncertainty analyses and an epistemic uncertainty analysis.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary system for High resolution simulation prediction for Computational Fluid Dynamics according to some embodiments of the present disclosure.
FIG.2 is a functional block diagram for High resolution simulation prediction for Computational Fluid Dynamics according to some embodiments of the present disclosure.
FIGS.3A-3B is a flow diagram illustrating a method (300) for High resolution simulation prediction for Computational Fluid Dynamics in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

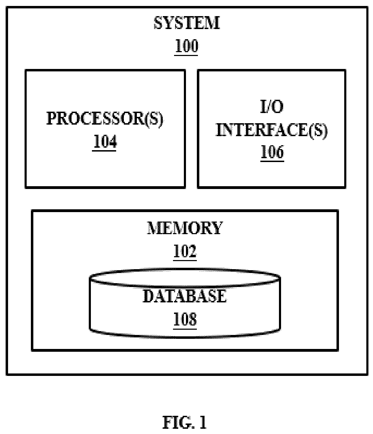

Referring now to the drawings, and more particularly to FIG.1 through FIG.3B, where similar reference characters denote corresponding features consistently throughout the figures, there are shown preferred embodiments and these embodiments are described in the context of the following exemplary system and/or method.

FIG.1 is an exemplary block diagram of a system 100 for High resolution simulation prediction for Computational Fluid Dynamics in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of the system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 is configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, a network cloud and the like.

The I/O interface(s) 106 can include a variety of software and hardware interfaces, for example, a web interface, a graphical user interface, a touch user interface (TUI) and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

Further, the memory 102 may include a database 108 configured to include information regarding High resolution simulation prediction for Computational Fluid Dynamics. The memory 102 may comprise information pertaining to input(s)/output(s) of each step performed by the processor(s) 104 of the system 100 and methods of the present disclosure. In an embodiment, the database 108 may be external (not shown) to the system 100 and coupled to the system via the I/O interface 106.

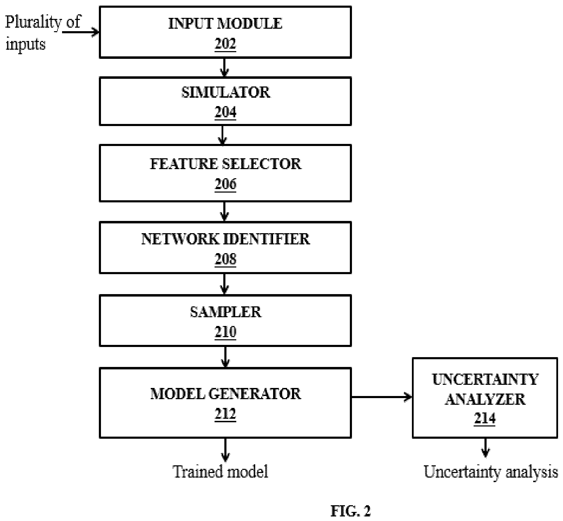

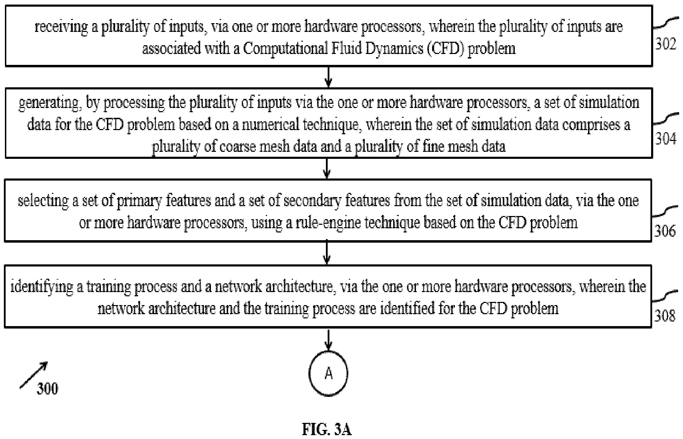

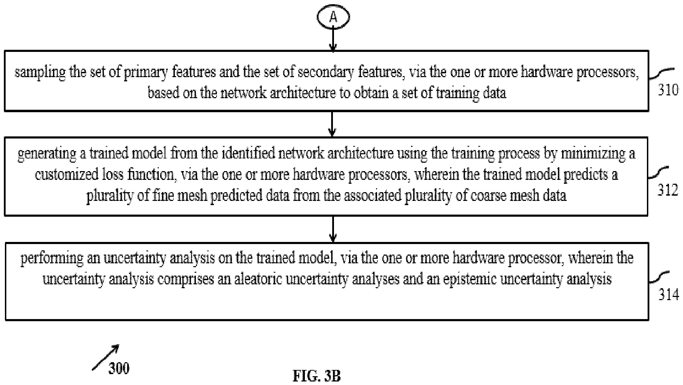

Functions of the components of system 100 are explained in conjunction with functional overview of the system 100 in FIG.2 and flow diagram of FIGS.3A and FIG.3B for High resolution simulation prediction for Computational Fluid Dynamics.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

FIG.2 is an example functional block diagram of the various modules of the system of FIG. 1, in accordance with some embodiments of the present disclosure. As depicted in the architecture, the FIG.2 illustrates the functions of the modules of the system 100 that includes High resolution simulation prediction for Computational Fluid Dynamics.

As depicted in FIG.2, the functional system 200 of the system 100 is configured for High resolution simulation prediction for Computational Fluid Dynamics.

The system 200 comprises an input module 202 configured for receiving a plurality of inputs, wherein the plurality of inputs are associated with a Computational Fluid Dynamics (CFD) problem. The system 200 further comprises a simulator 204 configured for generating a set of simulation data for the CFD problem based on a numerical technique, wherein the set of simulation data comprises a plurality of coarse mesh data and a plurality of fine mesh data. The system 200 further comprises a feature selector 206 configured for selecting a set of primary features and a set of secondary features from the set of simulation data using a rule-engine technique based on the CFD problem. The system 200 further comprises a network identifier 208 configured for identifying a training process and a network architecture for the CFD problem. The system 200 further comprises a sampler 210 configured for sampling the set of primary features and the set of secondary features based on the network architecture to obtain a set of training data. The system 200 further comprises a model generator 212 configured for generating a trained model from the identified network architecture using the training process by minimizing a customized loss function wherein the trained model predicts a plurality of fine mesh predicted data from the corresponding plurality of coarse mesh data. The system 200 further comprises an uncertainty analyzer 214 configured for performing an uncertainty analysis on the trained model, wherein the uncertainty analysis comprises an aleatoric uncertainty analyses and an epistemic uncertainty analysis.

The various modules of the system 100 and the functional blocks in FIG.2 are configured for high resolution simulation prediction for Computational Fluid Dynamics (CFD) are implemented as at least one of a logically self-contained part of a software program, a self-contained hardware component, and/or, a self-contained hardware component with a logically self-contained part of a software program embedded into each of the hardware component that when executed perform the above method described herein.

Functions of the components of the system 200 are explained in conjunction with functional modules of the system 100 stored in the memory 102 and further explained in conjunction with flow diagram of FIGS.3A-3B. The FIGS.3A-3B with reference to FIG. 1, is an exemplary flow diagram illustrating a method 300 for High resolution simulation prediction for Computational Fluid Dynamics using the system 100 of FIG. 1 according to an embodiment of the present disclosure. High mesh resolutions provide a detailed representation of the simulation domain using sophisticated physics models and algorithms, while low mesh resolutions provide fewer data points to represent the simulation domain using simplified physics models and algorithms.

The steps of the method of the present disclosure will now be explained with reference to the components of the system 100 of FIG.1 for High resolution simulation prediction for Computational Fluid Dynamics and the modules 202-214 as depicted in FIG.2 and the flow diagrams as depicted in FIGS.3A-3B. Although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 302 of a method 300 in FIGS.3A-3B, a plurality of inputs is received in the input module 202. The plurality of inputs is associated with a Computational Fluid Dynamics (CFD) problem.

The Computational Fluid Dynamics (CFD) is a computational approach employed to analyze and simulate fluid flow behaviors, including heat transfer and related phenomena. The CFD utilizes numerical techniques to discretize the fluid domain into a grid or mesh, enabling the solution of governing equations of fluid motion through computation. Through visualization, CFD facilitates the comprehension of flow characteristics and phenomena. An example scenario for CFD is development of an aircraft wing. The CFD simulations are harnessed to investigate the airflow patterns around the wing under various conditions of speed and angles of attack by using the wing's geometric attributes and environmental variables as inputs into specialized software, to predict aerodynamic properties like lift and drag. This empowers them to refine the wing's design efficiently, optimizing its performance and efficiency, eliminating the need for costly and time-intensive wind tunnel experiments.

In an embodiment, the plurality of inputs regarding CFD includes:

- Geometry parameter is a information about a geometry in which the CFD simulation is performed.
- Operating conditions such as boundary condition or initial condition for the simulation.
- Process equation /Model which would refer to the governing equations.
- Numerical method such as Finite Volume Method (FVM), a Finite Element Method (FEM), and a Finite Difference Method (FDM).
- Process measurement, which is the Sensory input.

At step 304 of the method 300, a set of simulation data is generated for the CFD problem based on a numerical technique in the simulator 204. The set of simulation data comprises a plurality of coarse mesh data and a plurality of fine mesh data.

In an embodiment, the numerical technique comprises one of a Finite Volume Method (FVM), a Finite Element Method (FEM), and a Finite Difference Method (FDM). The technique is decided based on a user input and the plurality of input.

The simulated data pairs coarse and fine mesh solution profiles for primary features such as pressure, temperature, and velocity, along with secondary derivative features like shear stress and flow vorticity. The set of simulation data is generated using the plurality of inputs such as the geometry parameter, the operating condition, the process equation /Model, the numerical method and the process measurement.

The FEM involves discretizing the domain into smaller elements, computing equations for each element, and then combining them to obtain a global solution. It is favored for complex geometries due to its accuracy but requires more computational power and mesh quality.

The FDM discretizes the domain into nodes where results are determined. It approximates derivatives using finite differences and is known for simplicity and low computational cost. However, it may provide lower-order approximations and challenges in conserving properties like flow or thermal fluxes.

The FVM transforms partial differential equations into linear algebraic equations by integrating over control volumes. The FVM excels in conserving properties, making it suitable for handling conservation laws efficiently.

In an example scenario, simulation of turbulent flow behavior over 2D NACA airfoils, which comprises 4-digit and 5-digit variants, within a rectangular domain using an irregular structured mesh, is considered. The operating conditions encompass Reynolds numbers ranging from 2 to 6 million and angles of attack spanning from -5 to 15 degrees. For turbulent flow behaviour simulation, the governing equations relevant to National Advisory Committee for Aeronautics (NACA) airfoil flows are employed and the Finite Volume Method is utilized as the numerical approach. The simulator takes as input the geometry of the airfoil within the rectangular domain, the specified Reynolds number range, the angle of attack range, and the governing equations tailored for NACA airfoil simulations. Additionally, it incorporates the Finite Volume solver to solve these governing equations. Two sets of mesh cases are considered: one with a coarse mesh representing low-fidelity simulations, and the other with a fine mesh representing high-fidelity simulations. The low fidelity simulations uses coarse meshes with simplified geometry and fewer elements, wherein the mesh resolution is low, meaning fewer data points to represent the simulation domain, while the high-fidelity simulation utilizes fine meshes with intricate geometry and numerous elements wherein the mesh resolution is high, providing a more detailed representation of the simulation domain. Further low fidelity simulations utilize simplified physics models and algorithms with simulations running faster due to their simplicity, while the high-fidelity simulation utilizes sophisticated physics models and algorithms with simulations taking longer time due to their complexity. The Finite Volume solver, chosen from open-source software options such as Open FOAM (Open Field Operation And Manipulation) and Stanford University Unstructured (SU2), or licensed software like Ansys, facilitates the computation of flow fields for both mesh cases. The output of the simulator comprises field data generated by the Finite Volume solver for both the low-fidelity (coarse mesh) and high-fidelity (fine mesh) simulations, wherein the datasets serve as the training data for Machine Learning models aimed at predicting aerodynamic characteristics of the fine mesh simulation by utilizing corresponding coarse mesh solutions.

At step 306 of the method 300, a set of primary features and a set of secondary features is selected in the feature selector 206. The set of primary features and the set of secondary features is selected from the set of simulation data using a rule-engine technique based on the CFD problem.

In an embodiment, the rule engine technique comprises:

(a) selecting the set of simulation data as the set of primary features, if the set of simulation data was estimated based on simulation algorithms, and
(b) selecting the set of simulation data as the set of secondary features, if the set of simulation data is derived from the set of primary features using one of a linear combination, or a non-linear combination of the set of primary features.

In an example scenario for conducting a turbulent flow simulation over a 2D NACA airfoil within a rectangular domain, the rule engine-based techniques would include applying Finite Volume Method to solve the governing equations, and then generating pressure, temperature, velocity, and turbulent eddy viscosity because of the simulation for crucial field data. The result of simulation are parameters that serve as primary features, offering insights into the flow characteristics. To delve deeper into the impact of the airfoil shape on flow behavior, secondary features are also derived. For instance, coefficients of lift and drag are computed based on the pressure and velocity field data. These secondary features provide a nuanced understanding of the forces exerted by the airfoil shape within the fluid domain, aiding aerodynamic analysis and optimization efforts.

At step 308 of the method 300, a training process and a network architecture are identified for the CFD problem in the network identifier 208. In an embodiment, the training process and the network architecture are identified for the CFD problem based on a plurality of factors like a mesh type, a data complexity, and a size, wherein the mesh type includes a regular mesh, an irregular mesh, a structured mesh and an unstructured mesh, the data complexity refers to the nature of governing partial differential equations (PDEs). The data format is also decided based on the plurality of factors for the CFD problem and the identified network architecture.

In an example scenario for datasets with regular structured mesh data, Convolutional Neural Networks (CNN) would prove to be an efficient and quick solution. Their simplicity makes them particularly suitable for applications where training time is a critical factor. While Graph Neural Network (GNN) would be invaluable for handling irregular or unstructured mesh data seamlessly, as they effortlessly treat grid nodes as graph nodes and mesh edges as graph edges. Further, PointNET would be a valuable choice for scenarios involving complex or 3D geometry and unstructured or structured mesh, where training a graph-based model can be resource-intensive. Point clouds offer a viable alternative without the need for detailed mesh information. Utilizing a combination or variants of two or more methods provides a flexible approach to address diverse simulation scenarios, leveraging the strengths of each technique for enhanced accuracy and efficiency.

In an example scenario, in the case of laminar methane combustion or 2D Burger's flow, simulated on a structured, regular mesh in a 2D rectangular domain. exhibits low complexity in comparison to other existing cases. Additionally, since it is simulated on a regular mesh, a structured mesh is identified. To handle this structured data, a CNN-based network is selected, by the demonstrably faster training times and lower network complexity offered by CNNs, while also enabling the effective capture of underlying physical relationships within the simulation domain. Following the selection of the CNN architecture, the structured data undergoes further processing within the network identifier 208 to ensure optimal preparation for subsequent model development.

In another example scenario, considering a 2D airfoil simulation or multi-physics flow in a 2D rectangular domain. The 2D airfoil simulation presents a more complex case compared to the laminar methane combustion. The data here is inherently more complex, with a higher number of data points. Graph representations prove more effective in handling complex data and generating accurate results in less time. Hence a Graph Neural Network (GNN) is identified for the scenario. Data provided as input undergoes transformation within the Data Processing Module, where it's converted into a graph representation using methods like radius graphs or k-Nearest Neighbor Graphs (k-NNG). This graph representation then serves as input to the GNN for subsequent tasks.

In yet another example scenario, considering a 3D wing flow or bioreactor simulations, where the complexity of the data significantly increases due to the three-dimensional nature and the larger number of data points involved. Additionally, these flows are typically simulated on irregular meshes, with mesh refinement around regions of interest. Given the nature of this mesh, convolution is not feasible. Furthermore, in the case of GNNs, due to the high number of message-passing within the data, training time increases substantially compared to the previous cases. Consequently, for such scenarios, point clouds have proven to be advantageous. In literature, they have shown great promise in learning dense, complex data while accurately capturing both global and local features simultaneously. The Point cloud based Neural Network is selected for the scenario. Then the data is converted to a point cloud using the cell centers/nodes from the computational domain.

At step 310 of the method 300, the set of primary features and the set of secondary features is sampled in the sampler 210. The sampling is performed based on the network architecture to obtain a set of training data.

In an embodiment, a specific data format is chosen based on the selected neural network model in the the network identifier 208. The specific data format is chosen based on a pre-defined mapping technique where in an example - structured grid data is chosen for CNN, graph representation is chosen for GNN, or point cloud is chosen for PointNET. This chosen format is then provided as input to the model generator 212.

The set of primary features and the set of secondary feature undergoes an up-sampling process to enhance its resolution, aligning it with the shape of the plurality of fine mesh in the same chosen data format. The employed up-sampling method utilizes Inverse Distance Weighting with exponential weights. The interpolated feature $V(n)$ of the coarse mesh at point $n$ is calculated using the formula:

$$V(n) = \frac{\sum_{i=1}^{n} V_i \cdot e^{-\left(\frac{D_i}{D_0}\right)^2}}{\sum_{i=1}^{n} e^{-\left(\frac{D_i}{D_0}\right)^2}} \quad (1)$$

where $D_i$ represents the Euclidean distance between coarse points $m$ and fine points n, and $D_0$ is the correlation distance (in this case, the maximum distance is used).

The set of primary features and the set of secondary features is sampled by transforming mesh data and geometry information into the appropriate format for the chosen model:

- For CNN models, the data is converted into a structured grid.
- GNN models operate on graph-formatted data.
- PointNET models process point cloud data.

At step 312 of the method 300, a trained model is generated in the model generator 212 from the identified network architecture. The trained model is generated using the training process by minimizing a customized loss function. The trained model predicts a plurality of fine mesh predicted data from the corresponding plurality of coarse mesh data.

The crucial aspect of fine-tuning the model involves selecting appropriate hyperparameters for the training data. Common hyperparameters include the model optimizer, choice of loss function (data/physics-driven), learning rate (with weight decay), hidden dimension, activation function, and batch size. During the training process, the model's performance on unseen test data is evaluated to determine potential overfitting or underfitting. Various performance metrics, along with residuals of the governing equation, are employed to analyze the accuracy of the model. Additionally, the model's efficiency in terms of computational cost savings is assessed.

In an embodiment, customized loss function combines a data loss and a physics loss. The neural network for model training is already selected based on the network identifier 208, the selected network will train its weights and bias to map the low fidelity (coarse data) to the high-fidelity (fine data). In the training process, a customized loss function that combines both data loss and physics loss is employed. This loss function encourages and updates the network's gradient to learn from the data and the underlying physics of the system. The data loss ($\mathcal{L}_{data}$) is computed as a Mean Square Error (MSE) between the plurality of fine mesh data and the plurality of fine mesh predicted data. The physics loss ($\mathcal{L}_{physics}$) measures a MSE of residuals of a set of governing equations used in the CFD problem. The loss function encourages and updates the network's gradient to learn from the data and the underlying physics of the system.

In an example scenario of the laminar methane combustion or 2D Burger's flow, the loss functions are computed as follows:

$\mathcal{L}_{physics}$ is the weighted combination of individual component residual loss of the governing equation.

$$\mathcal{L}_{physics} = \lambda_1\,\mathcal{L}_{continuity} + \lambda_2\,\mathcal{L}_{momemtum} + \lambda_3\,\mathcal{L}_{species} + \lambda_4\,\mathcal{L}_{energy} \quad --- (2)$$

Continuity Equation residual loss:

$$\mathcal{L}_{continuity} = \left| \left(\partial_t \rho + \nabla \cdot (\rho u)\right)_{fine} - \left(\partial_t \rho + \nabla \cdot (\rho u)\right)_{pred} \right| \quad ---- (3)$$

Momentum Equation residual loss:

$$\mathcal{L}_{momemtum} = \left| \left(\partial_t(\rho u) + \nabla \cdot (\rho uu) + \nabla p - \mu(\nabla^2 u)\right)_{fine} \right.$$
$$\left. - \left(\partial_t(\rho u) + \nabla \cdot (\rho uu) + \nabla p - \mu(\nabla^2 u)\right)_{pred} \right| \quad --- (4)$$

Species Transport Equation residual loss:

$$\mathcal{L}_{species} = \left| \left(\partial_t(\rho Y_i) + \nabla \cdot (\rho u Y_i) - \mu \nabla^2 Y_i - \dot{R}_i\right)_{fine} - \left(\partial_t(\rho Y_i) + \nabla \cdot (\rho u Y_i) - \right. \right.$$
$$\left. \left. \mu \nabla^2 Y_i - \dot{R}_i\right)_{pred} \right| \quad --- (5)$$

Energy Equation residual loss:

$$\mathcal{L}_{energy} = \left| \left(\partial_t(\rho h) + \nabla(\rho u h) + \partial_t(\rho K) + \nabla(\rho u K) - \partial_t p - \alpha \nabla^2 h - \dot{R}_{heat}\right)_{fine} \right.$$
$$- \left(\partial_t(\rho h) + \nabla(\rho u h) + \partial_t(\rho K) + \nabla(\rho u K) - \partial_t p - \alpha \nabla^2 h \right.$$
$$\left. \left. - \dot{R}_{heat}\right)_{pred} \right| \quad --- (6)$$

where $\lambda_1$, $\lambda_2$, $\lambda_3$ and $\lambda_4$ correspond to the individual components of the residual loss for the governing equation of laminar methane combustion.

In another example scenario of the 2D airfoil simulation or multi-physics, the loss functions are computed as follows:

$$\mathcal{L}_{physics} = \lambda_1\,\mathcal{L}_{continuity} + \lambda_2\,\mathcal{L}_{momemtum} + \lambda_3\,\mathcal{L}_{transport} \quad (7)$$

Continuity Equation residual loss:

$$\mathcal{L}_{continuity} = \left| \left(\partial_t \rho + \nabla \cdot (\rho \boldsymbol{u})\right)_{fine} - \left(\partial_t \rho + \nabla \cdot (\rho \boldsymbol{u})\right)_{pred} \right| \quad (8)$$

Momentum Equation residual loss:

$$\mathcal{L}_{momemtum} = \left\| \left( \partial_t(\rho \boldsymbol{u}) + \nabla \cdot (\rho \boldsymbol{u}\boldsymbol{u}) + \nabla p - \nabla \cdot (\mu + \mu_t)(\nabla \boldsymbol{u} + (\nabla \boldsymbol{u})^T) \right. \right.$$

$$\left. + \frac{2}{3}\mu(\nabla \cdot \boldsymbol{u})I - \rho g \right)_{fine}$$

$$- \left( \partial_t(\rho \boldsymbol{u}) + \nabla \cdot (\rho \boldsymbol{u}\boldsymbol{u}) + \nabla p - \nabla \cdot (\mu + \mu_t)(\nabla \boldsymbol{u} + (\nabla \boldsymbol{u})^T) \right.$$

$$\left. \left. + \frac{2}{3}\mu(\nabla \cdot \boldsymbol{u})\boldsymbol{I} - \rho g \right)_{pred} \right\| \quad (9)$$

Where $\mu_t = \rho \tilde{v} f_{v_1}$ (turbulent eddy viscosity), $\quad f_{v_1} = \dfrac{\chi^3}{\chi^3 + (c_{v_1})^3} \quad$ and $\quad \chi = \dfrac{\tilde{v}}{v} \quad$ and $C_{v_1}$ = 7.1 Turbulent Kinematic Eddy viscosity Transport Equation residual loss:

$$\mathcal{L}_{transport} = \left\| \left( \partial_t \tilde{v} + \nabla \cdot (\boldsymbol{u}\tilde{v}) - C_{b_1}\bar{S}\tilde{v} - \frac{1}{\sigma}\left[\nabla \cdot (v + \tilde{v})(\nabla \tilde{v}) + C_{b_2}(\nabla \tilde{v})^2\right] \right. \right.$$

$$\left. + C_{w_1}f_w\left(\frac{\tilde{v}}{d}\right)^2 \right)_{fine}$$

$$- \left( \partial_t \tilde{v} + \nabla \cdot (\boldsymbol{u}\tilde{v}) - C_{b_1}\bar{S}\tilde{v} - \frac{1}{\sigma}\left[\nabla \cdot (v + \tilde{v})(\nabla \tilde{v}) + C_{b_2}(\nabla \tilde{v})^2\right] \right.$$

$$\left. \left. + C_{w_1}f_w\left(\frac{\tilde{v}}{d}\right)^2 \right)_{pred} \right\| \quad (10)$$

At step 314 of method 300, an uncertainty analysis is performed on the trained model in the uncertainty analyzer 214. The uncertainty analysis comprises an aleatoric uncertainty analyses and an epistemic uncertainty analysis.

Deep learning neural network models play a crucial role in various applications for making inferences and decisions. Therefore, it is becoming increasingly crucial to assess the reliability and effectiveness of these models before deploying them in industrial settings. This is because predictions from such models can be affected by noise and inference errors, making it essential to accurately represent uncertainty in a reliable manner within AI-based systems.

The aleatoric uncertainty refers to an uncertainty stemming from a data uncertainty perspective and the aleatoric uncertainty analysis is performed based on an input perturbation analysis.

The epistemic uncertainty refers to an uncertainty arising from a knowledge gap and the epistemic analysis is performed based on using a Shapley value analysis, and a Monte Carlo dropout analysis technique.

In an embodiment, the aleatoric uncertainty analysis is done based on input perturbation analysis, wherein the slight input perturbations (noise) is introduced to individual features of the test data at a coarse level. Then, the perturbed data is fed into the trained model, which predicts the fine data. By comparing the model's predictions with and without noise, calculated through the L2 norm, the influence of these perturbations can be used for the uncertainty prediction. A lower L2 norm indicates greater robustness in the model's predictions. Input perturbation involves introducing small changes to individual input features and observing the resulting impact on the model's predictions. This helps identify which features have a significant impact on the model's output. Assessing how robust the model is to small changes in input features is crucial for understanding its stability.

The epistemic uncertainty refers to an uncertainty arising from a knowledge gap and the epistemic analysis is performed based on using a Shapley value analysis, and a Monte Carlo dropout analysis technique.

In an embodiment, the epistemic uncertainty is performed based on the Shapley Additive Explanations (SHAP) explainable AI, wherein the test coarse data is fed int the trained model. Shapley values apply cooperative game theory to attribute contributions of each feature to the model's prediction, that provide a fair and consistent way to allocate contributions among features. By understanding the individual and collective contributions of features, one can gain insights into the model's behavior and identify which features play a pivotal role in shaping predictions, which is essential for robustness analysis. The SHAP technique provides a fair and consistent method for attributing contributions among features to the model predictions, especially when dealing with high-fidelity simulation data features, such as fine mesh data. After applying the SHAP Python technique, Shapley values are generated, indicating the impact of each feature on the model output. These Shapley values serve to identify the significance of each feature in influencing the model predictions and direct the model's behavior concerning these features, that reveal whether the model prediction is directly or inversely proportional to specific features.

In another embodiment, the epistemic uncertainty is performed based on the Monte Carlo dropout analysis technique. In the Monte Carlo dropout analysis technique, the input data (test coarse data) undergoes multiple iterations through a trained model. In each iteration, the model operates with varying dropout mask configurations, where a random set of neurons is excluded from the model. Each dropout model produces distinct estimates, forming a distribution of predictions rather than a singular estimate. These N different estimates are then averaged to yield the final prediction of the fine mesh features, serving as the expected value or mean prediction of the network. The variability among these estimates provides insight into the uncertainty associated with each feature. Monte Carlo Dropout involves applying dropout during testing and observing the variability in predictions, which helps analyze the impact of input variations on the uncertainty of predictions. Robust models should exhibit stable predictions in the face of input variations. Examining the uncertainty provides insights into the model's confidence and helps assess its ability to handle diverse scenarios.

Further, to predict high-fidelity flow simulations from corresponding unseen low-fidelity flows, an inference analysis is performed. The inference analysis is performed using a trained model from the model generator, ensuring its preservation for further testing and analysis of unseen scenarios. Whenever the framework undergoes training for a particular CFD simulation, it retains the best model to be utilized for future predictions. This repository facilitates integration and application of the model's insights across diverse contexts and scenarios.

Testing scenario:

The trained model is utilized to predict the plurality of fine mesh simulation data for a plurality of CFD problem scenarios. The trained ML is utilized to predict the plurality of fine mesh simulation data for a plurality of CFD problem scenarios utilizing their corresponding unseen low-fidelity flows. A few examples of CFD scenario includes - turbulent NACA airfoil simulation, the unseen airfoil coarse mesh simulation field data(low-fidelity flow) is used to predict its corresponding high-fidelity flow simulation field data.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

This disclosure relates generally to High resolution simulation prediction for Computational Fluid Dynamics. Computational Fluid Dynamics (CFD) plays a crucial role in comprehending intricate physical phenomena spanning across scientific and engineering domains, hence it is essential to conduct simulations at high mesh resolutions for the governing equation of fluid flow. The current state-of-the-art super-resolution techniques involve reconstructing high-resolution data from down sampled low-resolution that is computationally intensive, time-consuming and does not accurately reflect real-world scenarios. The disclosed techniques predict a plurality of fine mesh predicted data from the corresponding plurality of coarse mesh data instead of simply down sampling from a high-resolution data. The disclosure also ensures robustness of the techniques based on an uncertainty analysis that includes aleatoric uncertainty analyses and an epistemic uncertainty analysis.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components.

For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

   receiving a plurality of inputs, via one or more hardware processors, wherein the plurality of inputs are associated with a Computational Fluid Dynamics (CFD) problem (302);
   generating, by processing the plurality of inputs via the one or more hardware processors, a set of simulation data for the CFD problem based on a numerical technique, wherein the set of simulation data comprises a plurality of coarse mesh data and a plurality of fine mesh data (304);
   selecting a set of primary features and a set of secondary features from the set of simulation data, via the one or more hardware processors, using a rule-engine technique based on the CFD problem (306);
   identifying a training process and a network architecture, via the one or more hardware processors, wherein the network architecture and the training process are identified for the CFD problem (308);
   sampling the set of primary features and the set of secondary features, via the one or more hardware processors, based on the network architecture to obtain a set of training data (310);
   generating a trained model from the identified network architecture using the training process by minimizing a customized loss function, via the one or more hardware processors, wherein the trained model predicts a plurality of fine mesh predicted data from the associated plurality of coarse mesh data (312); and
   performing an uncertainty analysis on the trained model, via the one or more hardware processor, wherein the uncertainty analysis comprises an aleatoric uncertainty analyses and an epistemic uncertainty analysis (314).

2. The processor implemented method as claimed in 1, wherein the trained model is utilized to predict the plurality of fine mesh simulation data for a plurality of CFD problem scenarios, and wherein the numerical technique comprises one of a Finite Volume Method (FVM), a Finite Element Method (FEM), and a Finite Difference Method (FDM).

3. The processor implemented method as claimed in 1, wherein the rule engine technique comprises: (a) selecting the set of simulation data as the set of primary features, if the set of simulation data is estimated based on one or more simulation algorithms, and (b) selecting the set of simulation data as the set of secondary features, if the set of simulation data is derived from the set of primary features using a linear combination and a non-linear combination of the set of primary features.

4. The processor implemented method as claimed in 1, the customized loss function combines a data loss and a physics loss, where the data loss ($\mathcal{L}_{data}$) is computed as a Mean Square Error (MSE) between the plurality of fine mesh data and the plurality of fine mesh predicted data, and wherein the physics loss ($\mathcal{L}_{physics}$) measures a MSE of residuals of a set of governing equations used in the CFD problem.

5. The processor implemented method as claimed in 1, wherein:

the aleatoric uncertainty refers to an uncertainty stemming from a data uncertainty perspective and the aleatoric uncertainty analysis is performed based on an input perturbation analysis, and
the epistemic uncertainty refers to an uncertainty arising from a knowledge gap and the epistemic analysis is performed based on a Shapley value analysis, and a Monte Carlo dropout analysis technique.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a plurality of inputs, via one or more hardware processors, wherein the plurality of inputs are associated with a Computational Fluid Dynamics (CFD) problem;
generate, by processing the plurality of inputs via the one or more hardware processors, a set of simulation data for the CFD problem based on a numerical technique, wherein the set of simulation data comprises a plurality of coarse mesh data and a plurality of fine mesh data;
select a set of primary features and a set of secondary features from the set of simulation data, via the one or more hardware processors, using a rule-engine technique based on the CFD problem;
identify a training process and a network architecture, via the one or more hardware processors, wherein the network architecture and the training process are identified for the CFD problem;
sample the set of primary features and the set of secondary features, via the one or more hardware processors, based on the network architecture to obtain a set of training data;
generate a trained model from the identified network architecture using the training process by minimizing a customized loss function, via the one or more hardware processors, wherein the trained model predicts a plurality of fine mesh predicted data from the associated plurality of coarse mesh data; and
perform an uncertainty analysis on the trained model, via the one or more hardware processor, wherein the uncertainty analysis comprises an aleatoric uncertainty analyses and an epistemic uncertainty analysis.

7. The system (100) as claimed in claim 6, wherein the trained model is utilized to predict the plurality of fine mesh simulation data for a plurality of CFD problem scenarios, and wherein the numerical technique comprises one of a Finite Volume Method (FVM), a Finite Element Method (FEM), and a Finite Difference Method (FDM).

8. The system (100) as claimed in claim 6, wherein the rule engine technique comprises: (a) selecting the set of simulation data as the set of primary features, if the set of simulation data is estimated based on one or more simulation algorithms, and (b) selecting the set of simulation data as the set of secondary features, if the set of simulation data is derived from the set of primary features using a linear combination and a non-linear combination of the set of primary features.

9. The system (100) as claimed in claim 6, the customized loss function combines a data loss and a physics loss, where the data loss ($\mathcal{L}_{data}$) is computed as a Mean Square Error (MSE) between the plurality of fine mesh data and the plurality of fine mesh predicted data, and wherein the physics loss ($\mathcal{L}_{physics}$) measures a MSE of residuals of a set of governing equations used in the CFD problem.

10. The system (100) as claimed in claim 6, wherein:

the aleatoric uncertainty refers to an uncertainty stemming from a data uncertainty perspective and the aleatoric uncertainty analysis is performed based on an input perturbation analysis, and

the epistemic uncertainty refers to an uncertainty arising from a knowledge gap and the epistemic analysis is performed based on a Shapley value analysis, and a Monte Carlo dropout analysis technique.

11. One or more non-transitory machine-readable information storage mediums comprising one or more instructions which when executed by one or more hardware processors cause:

receiving a plurality of inputs, wherein the plurality of inputs are associated with a Computational Fluid Dynamics (CFD) problem;

generating, by processing the plurality of inputs, a set of simulation data for the CFD problem based on a numerical technique, wherein the set of simulation data comprises a plurality of coarse mesh data and a plurality of fine mesh data;

selecting a set of primary features and a set of secondary features from the set of simulation data, using a rule-engine technique based on the CFD problem;

identifying a training process and a network architecture, wherein the network architecture and the training process are identified for the CFD problem;

sampling the set of primary features and the set of secondary features, based on the network architecture to obtain a set of training data;

generating a trained model from the identified network architecture using the training process by minimizing a customized loss function, wherein the trained model predicts a plurality of fine mesh predicted data from the associated plurality of coarse mesh data; and

performing an uncertainty analysis on the trained model, wherein the uncertainty analysis comprises an aleatoric uncertainty analyses and an epistemic uncertainty analysis.

12. The one or more non-transitory machine-readable information storage mediums as claimed in claim 11, wherein the trained model is utilized to predict the plurality of fine mesh simulation data for a plurality of CFD problem scenarios, and wherein the numerical technique comprises one of a Finite Volume Method (FVM), a Finite Element Method (FEM), and a Finite Difference Method (FDM).

13. The one or more non-transitory machine-readable information storage mediums as claimed in claim 11, wherein the rule engine technique comprises: (a) selecting the set of simulation data as the set of primary features, if the set of simulation data is estimated based on one or more simulation algorithms, and (b) selecting the set of simulation data as the set of secondary features, if the set of simulation data is derived from the set of primary features using a linear combination and a non-linear combination of the set of primary features.

14. The one or more non-transitory machine-readable information storage mediums as claimed in claim 11, wherein the customized loss function combines a data loss and a physics loss, where the data loss ($\mathcal{L}_{data}$) is computed as a Mean Square Error (MSE) between the plurality of fine mesh data and the plurality of fine mesh predicted data, and wherein the physics loss ($\mathcal{L}_{physics}$) measures a MSE of residuals of a set of governing equations used in the CFD problem.

15. The one or more non-transitory machine-readable information storage mediums as claimed in claim 11, wherein:

the aleatoric uncertainty refers to an uncertainty stemming from a data uncertainty perspective and the aleatoric uncertainty analysis is performed based on an input perturbation analysis, and

the epistemic uncertainty refers to an uncertainty arising from a knowledge gap and the epistemic analysis is performed based on a Shapley value analysis, and a Monte Carlo dropout analysis technique.

SYSTEM
100

PROCESSOR(S)
104

I/O
INTERFACE(S)
106

MEMORY
102

DATABASE
108

FIG. 1

Plurality of inputs → **INPUT MODULE** 202

**SIMULATOR** 204

**FEATURE SELECTOR** 206

**NETWORK IDENTIFIER** 208

**SAMPLER** 210

**MODEL GENERATOR** 212 → **UNCERTAINTY ANALYZER** 214

Trained model

Uncertainty analysis

**FIG. 2**

receiving a plurality of inputs, via one or more hardware processors, wherein the plurality of inputs are associated with a Computational Fluid Dynamics (CFD) problem — 302

generating, by processing the plurality of inputs via the one or more hardware processors, a set of simulation data for the CFD problem based on a numerical technique, wherein the set of simulation data comprises a plurality of coarse mesh data and a plurality of fine mesh data — 304

selecting a set of primary features and a set of secondary features from the set of simulation data, via the one or more hardware processors, using a rule-engine technique based on the CFD problem — 306

identifying a training process and a network architecture, via the one or more hardware processors, wherein the network architecture and the training process are identified for the CFD problem — 308

A

300

FIG. 3A

Ⓐ

sampling the set of primary features and the set of secondary features, via the one or more hardware processors, based on the network architecture to obtain a set of training data ⟋ 310

generating a trained model from the identified network architecture using the training process by minimizing a customized loss function, via the one or more hardware processors, wherein the trained model predicts a plurality of fine mesh predicted data from the associated plurality of coarse mesh data ⟋ 312

performing an uncertainty analysis on the trained model, via the one or more hardware processor, wherein the uncertainty analysis comprises an aleatoric uncertainty analyses and an epistemic uncertainty analysis ⟋ 314

⟋ 300

FIG. 3B

**EUROPEAN SEARCH REPORT**

Europäisches
Patentamt
European
Patent Office
Office européen
des brevets

**Application Number**

EP 25 16 6066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAJAT KUMAR SARKAR ET AL: "Redefining Super-Resolution: Fine-mesh PDE predictions without classical simulations", ARXIV.ORG, CORNELL UNIVERSITY LIBRARY, 201 OLIN LIBRARY CORNELL UNIVERSITY ITHACA, NY 14853, 16 November 2023 (2023-11-16), XP091658038, * abstract * * figure 1; tables 1, 2 * * page 2, second paragraph * * sections 2.1-2.3, 3 * * the whole document * ----- | 1-15 | INV. G06F30/23 G06F30/27 G06F30/28 ADD. G06F111/10 G06F113/08 |
| X | HAIZHOU YANG ET AL: "Attention-based Multi-fidelity Machine Learning Model for Computational Fractional Flow Reserve Assessment", ARXIV.ORG, CORNELL UNIVERSITY LIBRARY, 201 OLIN LIBRARY CORNELL UNIVERSITY ITHACA, NY 14853, 19 November 2023 (2023-11-19), XP091858177, DOI: 10.1016/J.CMA.2024.117338 * abstract * * figures 1, 4 * * sections 2-2.4 * * the whole document * ----- -/-- | 1-15 | TECHNICAL FIELDS SEARCHED (IPC) G06F |

The present search report has been drawn up for all claims

| Place of search | Date of completion of the search | Examiner |
|---|---|---|
| Munich | 5 August 2025 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 16 6066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOCHKOV DMITRII ET AL: "Machine learning-accelerated computational fluid dynamics", PROCEEDINGS OF THE NATIONAL ACADEMY OF SCIENCES (PNAS), vol. 118, no. 21, 18 May 2021 (2021-05-18) , XP055981774, ISSN: 0027-8424, DOI: 10.1073/pnas.2101784118 * abstract * * figures 1, 2 * * page 2, column 2 - page 4, column 1 * * the whole document * ----- | 1-15 | |
| A | Anonymous: "Uncertainty quantification - Wikipedia", , 9 March 2023 (2023-03-09), XP093302303, Retrieved from the Internet: URL:https://en.wikipedia.org/w/index.php?title=Uncertainty_quantification&oldid=1143694386 [retrieved on 2025-08-05] * page 2 - page 3 * * the whole document * ----- | 1-15 | **TECHNICAL FIELDS SEARCHED (IPC)** |

The present search report has been drawn up for all claims

| Place of search | Date of completion of the search | Examiner |
|---|---|---|
| Munich | 5 August 2025 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421037547